# EUROPÄISCHE PATENTANMELDUNG

(11) **EP 1 591 691 A1**
(43) Veröffentlichungstag der Anmeldung: **02.11.2005**
(21) Anmeldenummer: 05008446.6
(22) Anmeldetag: 19.04.2005
(51) Int. Cl.: F16F 9/58, F16F 9/54, F16F 9/38, B60G 15/06

(54) **Federbeinstützlager**

(30) Priorität: 30.04.2004 DE 102004021497
(71) Anmelder: ZF FRIEDRICHSHAFEN AG, 88046 Friedrichshafen (DE)
(72) Erfinder: Handke, Günther, 97592 Euerbach (DE); Schulz, Markus, 42855 Remscheid (DE)

(57) **Zusammenfassung**

Federbeinstützlager, umfassend einen Lageranschluss an eine Fahrzeugkarosserie und einen zu einer Mittelachse eines Federbein schräggestellten Federteller für eine Fahrzeugtragfeder, wobei zwischen dem Lageranschluss und dem Federteller ein schräggestelltes Lager angeordnet ist, das ein dem Lageranschluss zugeordnetes Lagereingangsteil und ein dem Federteller zugeordnetes Lagerausgangsteil aufweist, mit einem Anschlagpuffer, der konzentrisch zur Mittelachse des Federbeins angeordnet ist und ab einer definierten Einfederungsposition auf einer zylinderseitigen Stirnfläche des Federbeins zur Anlage kommt, wobei der Anschlagpuffer mit dem Lagerausgangsteil des Lagers in Wirkverbindung steht.

## Beschreibung

Die Erfindung betrifft ein Federbeinstützlager gemäß dem Oberbegriff von Patentanspruch 1.

Aus der US2003/0006574 A1 ist zur Anbindung an eine Fahrzeugkarosserie ein Federbeinstützlager bekannt, das zwischen einem Federteller und einem Lageranschluss an die Fahrzeugkarosserie ein Lager aufweist. Ein zweiter Federteller ist zylinderseitig befestigt, wobei der Zylinder bei einer Lenkbewegung eines Fahrzeugrades synchron eine Schwenkbewegung ausführt, die von einer Fahrzeugtragfeder, die zwischen den beiden Federtellern verspannt ist, auf den lagerseitigen Federteller übertragen wird. Das Lager verhindert, dass innerhalb des Lagers eine Verspannung auftritt, die einerseits komfortmindernd ist und andererseits die Lebensdauer des Federbeinstützlagers negativ beeinflusst.

Die Mittelachsen des lagerseitigen Federteller und des Lagers weisen den identischen Verlauf zur Lenkachse des Fahrzeugrades auf. Mit dieser Maßnahme sollen störende Lenkmomente, die ein Schiefziehen des Fahrzeugs bewirken können, verhindert werden.

Das gattungsbildende Federbeinstützlager verfügt des weiteren über einen Anschlagpuffer, der bezogen auf den Kraftfluss innerhalb des Federbeinstützlagers parallel zum Lager axial abgestützt wird. Bei einer überlagerten Einfederungs- und Lenkbewegung kann der Zustand auftreten, dass der Anschlagpuffer auf einer zylinderseitigen Stirnfläche des Federbeins aufsetzt und damit die Schwenkbeweglichkeit des Lagers am Federteller blockiert.

Damit dieses Problem nicht auftritt, ist es aus der DE 83 11 927 U1 bekannt, den Anschlagpuffer über ein zweites Lager zum Zylinder eine Verdrehbewegung ausführen zu lassen. Ein zweites Lager stellt aber einen erheblichen Kosten- und Bauraumaufwand dar.

Aufgabe der vorliegenden Erfindung ist es, einen Schwingungsdämpfer zu realisieren, der bei einem schräggestellten Lager innerhalb eines Federbeinstützlagers das aus dem Stand der Technik bekannte Blockierproblem im Zusammenhang mit einem Anschlagpuffer löst.

Erfindungsgemäß wird die Aufgabe dadurch gelöst, dass der Anschlagpuffer mit dem Lagerausgangsteil des Lagers in Wirkverbindung steht.

Der große Vorteil der Erfindung besteht darin, dass der Anschlagpuffer bezogen auf das Federbein in Umfangsrichtung eine Relativbewegung ausführen kann, ohne dass eine Blockier- und Verspannungssituation innerhalb des Federbeinstützlagers auftritt. Auch der technische Aufwand ist sehr einfach, da man mit nur einem Lager das gesamte Federbeinstützlager inklusive dem Federteller von dem Zylinder des Federbeins drehentkoppelt.

In weiterer vorteilhafter Ausgestaltung sind die Mittelachse des schräggestellten Lagers und eine Lenkachse des Federbeins zumindest nahezu deckungsgleich ausgerichtet. Umfangreiche Tests haben ergeben, dass trotz der Winkelstellung zwischen dem Anschlagpuffer und der Lenkachse, um die das Federbein bei einer Lenkbewegung schwenkt, keine Klemm- oder Reibungskräfte zwischen dem Anschlagpuffer und einer Kolbenstange des Federbeins auftreten.

Es ist vorgesehen, dass der Federteller eine Mantelfläche aufweist, an der sich der Anschlagpuffer radial abstützt. Dafür verfügt der Federteller über einen Hülsenabschnitt, der sich konzentrisch zur Mittelachse des Federbeins erstreckt.

Zusätzlich weist der Federteller eine Haltefläche für ein den Anschlagpuffer einhüllendes rohrförmige Schutzelement auf. Folglich treten auch innerhalb des Schutzelements, das mit dem Zylinder des Federbeins endseitig verbunden sein kann, keine Torsionsbelastungen auf.

Das Lagerausgangsteil weist eine Stützfläche zur axialen Abstützung des Anschlagpuffers auf. Zur Vermeidung von Querkräften ist die Stützfläche rechtwinklig zu einer Mittelachse des Federbeins ausgerichtet.

Im Hinblick auf einen einfachen Montageablauf bilden der Federteller und das Lagerausgangsteil über axial verlaufende Klemmflächen eine Pressverbindung. Der Federteller und das Lagerausgangsteil können eine vormontierbare Baueinheit bilden, die unabhängig von einer vorgegebenen Taktzeit innerhalb eines Montageablaufs des gesamten Federbeins erstellt werden kann.

Der Federteller soll bevorzugt aus einem Kunststoff bestehen. Damit trotzdem auch sehr große Kräfte auf das Lagerausgangsteil übertragen werden können, ist zwischen dem Anschlagpuffer und dem Federteller eine Verstärkungshülse für den Federteller angeordnet.

Die Verstärkungshülse weist einen kreisringförmigen Boden auf, der sich am Lagerausgangsteil abstützt. Diese Maßnahme versteift die Verstärkungshülse zusätzlich und bietet die Möglichkeit, ein relativ dünnwandiges Lagerausgangsteil einzusetzen.

Zur axialen Sicherung des Anschlagpuffers zum Federbeinstützlager liegt zwischen der Verstärkungshülse und dem Anschlagpuffer eine Schnappverbindung vor.

Die Verstärkungshülse weist zumindest abgewinkelte Randabschnitte, ggf. auch einen vollständig umlaufenden Rand, auf, die sich axial an dem Federteller abstützen.

Die zumindest abgewinkelten Randabschnitte der Verstärkungshülse stellen eine weitere Haltefläche für das rohrförmige Schutzelement bereit. Damit liegen für das rohrförmige Schutzelement zwei wechselweise wirksame Haltefläche vor, so dass zwischen dem Schutzelement und dem Federbeinstützlager eine spielfreie Befestigung möglich ist.

Anhand der folgenden Figurenbeschreibung soll die Erfindung näher erläutert werden.

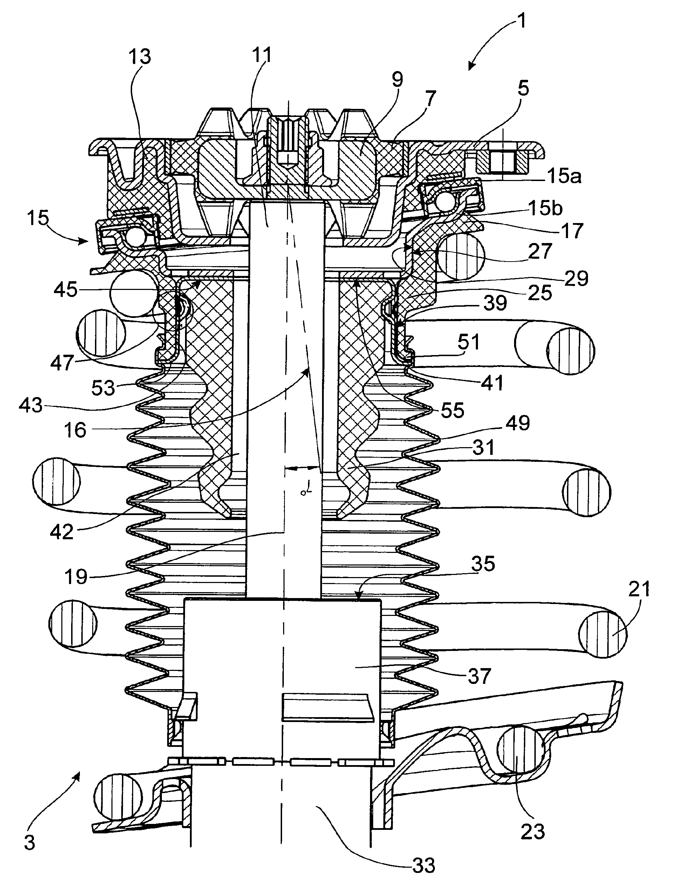

Die einzige Figur zeigt ein Federbeinstützlager 1 für ein Federbein 3, von dem nur ein oberer Teilbereich dargestellt ist. Das Federbeinstützlager verfügt über einen Lageranschluss 5 an eine nicht dargestellte Fahrzeugkarosserie. Mit seiner topfförmiger Raumform nimmt der Lageranschluss 5 einen Elastomerkörper 7 auf, der einen Anschlussring 9 außenseitig zumindest teilweise umschließt, wobei der Anschlussring mit einer Kolbenstange 11 des Federbeins axial und verdrehfest verbunden ist.

Außenseitig verfügt der Lageranschluss über einen weiteren Elastomerkörper 13, an dem sich ein Lager 15 axial und radial abstützt. Das Lager 15 ist schräg mit seiner Mittelachse zumindest nahezu deckungsgleich zu einer Lenkachse 16 ausgerichtet. Mit dem schräggestellten Lager 15 soll eine Kompensation von Querkräften erreicht werden, ohne dass das Lager selbst kritisch belastet wird. Die Lenkachse 16 schließt mit einer Mittelachse 19 des Federbeins 3 einen Winkel α ein. Das Lager 15 umfasst ein Lagereingangsteil 15a und ein Lagerausgangsteil 15b, die eine rotatorische Relativbewegung zueinander ausführen können. Für die Erfindung ist es unerheblich, ob ein Wälz- oder ein Gleitlager zur Anwendung kommt. An dem Lagerausgangsteil 15b stützt sich ein Federteller 17 für eine Fahrzeugtragfeder 21 an, die mit ihrem anderen Ende auf einem zylinderseitigen Federteller 23 aufliegt. Auch die Mittelachse der Fahrzeugtragfeder ist zumindest nahezu identisch zu der Lenkachse 16 ausgerichtet. Der bevorzugt aus einem Kunststoff gefertigte Federteller 17 verfügt über einen Hülsenabschnitt 25, so dass zwischen dem Federteller 17 und einen abgesetzten Bereich des Lagerausgangsteils 15b Klemmflächen 27; 29 eine Pressverbindung zwischen dem Lagerausgangsteil 15b und dem Federteller 17 vorliegt.

Konzentrisch zur Mittelachse 19 des Federbeins 3 ist ein Anschlagpuffer 31 angeordnet, der ab einer definierten Einfederungsposition der Kolbenstange 11 in einen Zylinder 33 auf einer zylinderseitigen Stirnfläche 35 des Federbeins, die in diesem Fall von einer zusätzlichen Kappe 37 gebildet wird, zur Anlage kommt. Der Anschlagpuffer 33 steht mit dem Lagerausgangsteil 15b des Lagers 15 in Wirkverbindung, so dass sich diese beiden Teile axial und in Umfangsrichtung synchron bewegen.

Der Federteller 17, insbesondere der Hülsenabschnitt 25, weist eine Mantelfläche 39 auf, an der sich der Anschlagpuffer 31 radial abstützt. Zur axialen Abstützung dient eine Stützfläche 41 des Lagerausgangsteils 15b, die rechtwinklig zur Mittelachse 19 des Federbeins ausgerichtet ist. Der Innendurchmesser des Anschlagpuffers 31 und der Kolbenstange 11 bilden einen freien Ringraum 42, um einen Reibkontakt der Kolbenstange mit dem Anschlagpuffer zu vermeiden.

Zwischen dem Anschlagpuffer 31 und dem Federteller 17 ist eine Verstärkungshülse 43 angeordnet. Diese Verstärkungshülse verfügt über einen kreisringförmigen Boden, 45, der sich am Lagerausgangsteil 15b axial abstützt. Die Verstärkungshülse 43 und der Anschlagpuffer 31 bilden eine Schnappverbindung 47, die z. B. nach radial innen gerichteten Sicken der Verstärkungshülse enthält, die in eine Nut des Anschlagpuffers eingreifen.

Die Kolbenstange 11 und der Anschlagpuffer 31 werden von einem rohrförmigen Schutzelement 49, in diesem Ausführungsbeispiel ein axial elastischer Balg, eingehüllt, wobei sich das Schutzelement 49 an einer Haltefläche 51 des Federtellers einseitig axial abstützt. Die Verstärkungshülse weist zumindest abgewindelte Randabschnitte 53, ggf. einen vollständig umlaufenden Rand, auf, der sich endseitig am Federteller abstützt, wobei dieser Rand eine weitere Haltefläche 55 für das rohrförmige Schutzelement 49 bereitstellt.

Bei Geradeausfahrt und einer kleinen bis mittleren Einfederungsbewegung der Kolbenstange zum Zylinder des Federbeins tritt weder eine Lagerbewegung noch ein Kontakt des Anschlagpuffers auf der zylinderseitigen Stirnfläche 35 auf.

Eine Lenkbewegung auch in Verbindung mit einer Einfederungsbewegung eines nicht dargestellten Rades um die Lenkachse 16 führt zu einer Verdrehbewegung innerhalb des Lagers 15 und damit zu einer Taumelbewegung des Anschlagpuffers zu einer gedachten vertikalen Bezugslinie, beispielsweise der Mittelachse 19. Gleichzeitig wird jedoch auch das Federbein um die Lenkachse 16 räumlich bewegt, so dass der vorhandene Ringraum 42 trotz der Relativbewegung des Anschlagpuffers 31 zur Kolbenstange 11 einen Reibkontakt des Anschlagpuffers mit der Kolbenstange verhindert.

## Patentansprüche

1. Federbeinstützlager, umfassend einen Lageranschluss an eine Fahrzeugkarosserie und einen zu einer Mittelachse eines Federbein schräggestellten. Federteller für eine Fahrzeugtragfeder, wobei zwischen dem Lageranschluss und dem Federteller ein schräggestelltes Lager angeordnet ist, das ein dem Lageranschluss zugeordnetes Lagereingangsteil und ein dem Federteller zugeordnetes Lagerausgangsteil aufweist, mit einem Anschlagpuffer, der konzentrisch zur Mittelachse des Federbeins angeordnet ist und ab einer definierten Einfederungsposition auf einer zylinderseitigen Stirnfläche des Federbeins zur Anlage kommt,
**dadurch gekennzeichnet,**
**dass** der Anschlagpuffer (31) mit dem Lagerausgangsteil (15a) des Lagers (15) in Wirkverbindung steht.

2. Federbeinstützlager nach Anspruch 1,
**dadurch gekennzeichnet,**
**dass** die Mittelachse des schräggestellten Lagers 15) und eine Lenkachse (16) des Federbeins (3) zumindest nahezu deckungsgleich ausgerichtet sind.

3. Federbeinstützlager nach Anspruch 1,
**dadurch gekennzeichnet,**
**dass** der Federteller (17) eine Mantelfläche (39) aufweist, an der sich der Anschlagpuffer (31) radial abstützt.

4. Federbeinstützlager nach Anspruch 3,
**dadurch gekennzeichnet,**
**dass** der Federteller (17) eine Haltefläche (51) für ein den Anschlagpuffer (31) einhüllendes rohrförmige Schutzelement (49) aufweist.

5. Federbeinstützlager nach Anspruch 1,
**dadurch gekennzeichnet,**
**dass** das Lagerausgangsteil (15b) eine Stützfläche (41) zur axialen Abstützung des Anschlagpuffers (31) aufweist.

6. Federbeinstützlager nach Anspruch 5,
**dadurch gekennzeichnet,**
**dass** die Stützfläche (41) rechtwinklig zu einer Mittelachse des Federbeins (3) ausgerichtet ist.

7. Federbeinstützlager nach Anspruch 1,
**dadurch gekennzeichnet,**
**dass** der Federteller (17) und das Lagerausgangsteil (15b) über axial verlaufende Klemmflächen (27; 29) eine Pressverbindung bilden.

8. Federbeinstützlager nach Anspruch 1,
**dadurch gekennzeichnet,**
**dass** zwischen dem Anschlagpuffer (31) und dem Federteller (17) eine Verstärkungshülse (43) für den Federteller (17) angeordnet ist.

9. Federbeinstützlager nach Anspruch 8,
**dadurch gekennzeichnet,**
**dass** die Verstärkungshülse (43) einen kreisringförmigen Boden (45) aufweist, der sich am Lagerausgangsteil (15b) abstützt.

10. Federbeinstützlager nach Anspruch 8,
**dadurch gekennzeichnet,**
**dass** zwischen der Verstärkungshülse (43) und dem Anschlagpuffer (31) eine Schnappverbindung (47) vorliegt.

11. Federbeinstützlager nach Anspruch 8,
**dadurch gekennzeichnet,**
**dass** die Verstärkungshülse (43) zumindest abgewinkelte Randabschnitte (53) aufweist, die sich axial an dem Federteller (17) abstützen.

12. Federbeinstützlager nach Anspruch 11,
**dadurch gekennzeichnet,**
**dass** zumindest die abgewinkelten Randabschnitte (53) der Verstärkungshülse (43) eine weitere Haltefläche (55) für das rohrförmige Schutzelement (49) bereitstellen.
